# EUROPÄISCHE PATENTANMELDUNG

(11) **EP 4 068 719 A1**
(43) Veröffentlichungstag der Anmeldung: **05.10.2022**
(21) Anmeldenummer: 21166286.1
(22) Anmeldetag: 31.03.2021
(51) Int. Cl.: H04L 29/06, H04L 9/32, G06F 21/57, H04L 9/08, H04L 29/08

(54) **VERFAHREN ZUM KRYPTOGRAPHISCH GESICHERTEN NACHWEIS EINES GERÄTEURSPRUNGS, GERÄT UND ÜBERPRÜFUNGSEINRICHTUNG**

(71) Anmelder: Siemens Aktiengesellschaft, 80333 München (DE)
(72) Erfinder: Falk, Rainer, 85586 Poing (DE); Feist, Christian Peter, 80689 München (DE); Pfau, Axel, 80333 München (DE); Pyka, Stefan, 85570 Markt Schwaben (DE); Schneider, Daniel, 80796 München (DE); Sperl, Franz, 92526 Oberviechtach (DE)

(57) **Zusammenfassung**

Zum kryptographisch gesicherten Nachweis eines Geräteursprungs wird in einen nicht veränderbaren Speicherbereich eines Geräts ein öffentlicher Schlüssel eines Herstellers des Geräts gespeichert. Im Gerät wird ein mit dem öffentlichen Schlüssel verknüpftes Gerätezertifikat gespeichert, das Informationen zur Verwendung des öffentlichen Schlüssels und Merkmale des Geräts umfasst. Anhand der vom Gerätezertifikat umfassten Merkmale und anhand veränderlicher, während eines Betriebs des Geräts erzeugter Daten, von außerhalb des Geräts zumindest mittelbar vorgegebener Daten und/oder erfasster Statusinformationen wird ein digitaler Fingerabdruck des Geräts erstellt und fortlaufend aktualisiert. Für einen Nachweis des Geräteursprungs wird der digitale Fingerabdruck an eine dem Hersteller zugeordnete Überprüfungseinrichtung übermittelt. Der digitale Fingerabdruck wird durch die Überprüfungseinrichtung mittels eines privaten Schlüssels des Herstellers und anhand von bei einer Erstellung des Gerätezertifikats herstellerseitig erfassten Referenz-Merkmalen des Geräts verifiziert.

## Beschreibung

Die vorliegende Erfindung betrifft ein Verfahren zum kryptographisch gesicherten Nachweis eines Geräteursprungs, insbesondere von Geräten innerhalb eines industriellen Automatisierungssystems, und ein Gerät sowie eine Überprüfungseinrichtung. Das Gerät und die Überprüfungseinrichtung sind zur Durchführung des erfindungsgemäßen Verfahrens vorgesehen.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung, Regelung oder Überwachung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

In WO 2020/182627 A1 ist ein Verfahren zur Überwachung der Integrität eines industriellen Cyber-physischen Systems beschrieben, bei dem Messdaten, die mit verschiedenen Sensoren des Cyber-physischen Systems erfasst wurden, bzw. Steuerdaten, die für verschiedene Aktuatoren des Cyber-physischen Systems bestimmt sind, bereitgestellt bzw. abgegriffen werden. Außerdem wird wenigstens ein Messdaten-Zusammenhangsparameter zwischen den mit den verschiedenen Sensoren erfassten Messdaten ermittelt, bzw. es wird wenigstens ein Steuerdaten-Zusammenhangsparameter zwischen den für die verschiedenen Aktuatoren bestimmten Steuerdaten ermittelt. Der wenigstens eine Messdaten-Zusammenhangsparameter wird mit einer Messdaten-Zusammenhangs-Referenz verglichen, bzw. der wenigstens eine Steuerdaten-Zusammenhangsparameter wird mit einer Steuerdaten-Zusammenhangs-Referenz verglichen. Basierend auf dem Vergleich wird die Integrität des zu überwachenden Cyber-physischen Systems beurteilt.

Aus WO 2020/212051 A1 ist ein industrielles Automatisierungsgerät bekannt, das eine Überwachungseinheit zur Überprüfung und Überwachung des Integritätszustandes des industriellen Automatisierungsgerätes umfasst. Außerdem ist zumindest eine Gerätekomponente vorgesehen, die rückwirkungsfrei über eine Kommunikationsverbindung mit der Überwachungseinheit kommuniziert. Dabei umfasst die rückwirkungsfreie Kommunikation ein Bereitstellen wenigstens eines Gerätekomponentenparameters von der Gerätekomponente an die Überwachungseinheit. Die Überwachungseinheit ist dazu ausgebildet, den bereitgestellten Gerätekomponentenparameter der Gerätekomponente des industriellen Automatisierungsgerätes zur Überprüfung und Überwachung des Integritätszustandes des industriellen Automatisierungsgerätes zu protokollieren und zu verarbeiten. Des Weiteren ist die Überwachungseinheit dazu ausgebildet, den Integritätszustand des industriellen Automatisierungsgerätes als Ergebnis des verarbeiteten Gerätekomponentenparameters der Gerätekomponente des industriellen Automatisierungsgerätes zu protokollieren bzw. bereitzustellen. Darüber hinaus ist die Überwachungseinheit als eine vertrauenswürdige Gerätekomponente durch einen Manipulationsschutz manipulationsgeschützt in dem industriellen Automatisierungsgerät ausgebildet.

Aus der älteren europäischen Patentanmeldung 20157998.4 ist ein computergestütztes Verfahren zum Überwachen eines Integritätsstatus einer Rechenvorrichtung bekannt, bei dem zunächst ein Initialisierungswert für einen Gesamtintegritätswert festgelegt wird. Danach wird der Gesamtintegritätswert in einem vertrauenswürdigen Speicherbereich einer Speichereinheit gespeichert. Anschließend erfolgt das Ermitteln eines Integritätsstatus durch ein Integritätserkennungssystem und Erzeugen eines Integritätsstatuswertes. Danach erfolgt das Speichern des Integritätsstatuswertes in dem Gesamtintegritätswert in dem vertrauenswürdigen Speicherbereich als Integritätsstatus.

Entsprechend bisherigen Ansätzen wird ein Originalzustand eines Geräts allenfalls durch eine Kombination von optischen und physikalischen Merkmalen nachgewiesen. Insbesondere können hierfür Plomben oder Versiegelungen an Verpackungen oder an Geräten, Identifikationsnummern auf Geräten verwendet werden. Hersteller-typische Merkmale, wie Logos oder Farben, sind ebenfalls eine Option, um einen Eindruck eines Originalzustands zu vermitteln.

Für IoT-Geräte ist eine als Device Identifier Composition Engine (DICE) bezeichnete Architektur definiert worden, die auf einem Unique Device Secret (UDS) basiert und zur Absicherung von Boot-Vorgängen für IoT-Geräte verwendet wird. Details zu DICE sind in https://www.microcontrollertips.com/what-isdice-architecture-faq/ beschrieben.

Authentizität und Integrität von Software oder Firmware kann beispielsweise mittels Secure Boot sichergestellt werden. Ausgehend von einer nicht veränderbaren Wurzel einer gesamten Sicherheitskette ("Root of Trust") werden die Authentizität bzw. Integrität von Software oder Firmware mittels kryptographischer Verfahren, insbesondere mittels digitaler Signaturen, während eines Boot-Vorgangs überprüft.

Bei Remote Attestation berechnet jede Boot-Komponente ausgehend von einer "Root of Trust" eine kryptographische Prüfsumme für eine jeweils nachfolgende Boot-Komponente. Die Prüfsummen können anschließend insbesondere innerhalb eines Trusted Platform Module (TPM) in speziellen Registern, wie Platform Configuration Registers (PCR), manipulationsgeschützt abgespeichert werden. Eine Liste mit PCR-Werten kann unter Hinzunahme weiterer Werte, wie Nonce, Zähler oder Uhrzeit, mit einem in einem Trusted Platform Module gespeicherten, nicht extrahierbaren privaten Schlüssel signiert und anschließend zusammen mit einer entsprechenden Signatur an eine andere Instanz bzw. an einen Server zur Überprüfung der Authentizität und Integrität von Software weitergegeben werden.

In industriellen Automatisierungssystemen ist es äußerst wichtig, zweifelsfrei feststellen zu können, ob verwendete Kommunikations- oder Automatisierungsgeräte einem insbesondere Hersteller-seitig vorgegebenen Originalzustand entsprechen. Für Betreiber eines industriellen Automatisierungssystems ist es von zentraler Bedeutung, ob es sich bei einem Automatisierungsgerät um ein Originalgerät handelt, das entweder vom Hersteller direkt oder von einem autorisierten Händler stammt. Dabei gilt es, insbesondere unzulässigerweise vorgenommene Änderungen an Hardware, Software bzw. Firmware ausschließen zu können. Auch Hersteller haben hieran ein großes Interesse, Originalgeräte von gefälschten oder manipulierten Geräten unterscheiden zu können, damit nur Originalgeräte zu einem Produkteinsatz kommen und Schadenspotentiale reduziert werden.

Der vorliegenden Erfindung liegt die Aufgabe zugrunde, ein gegenüber Manipulationen sicheres, aufwandsarm realisierbares Verfahren zum kryptographisch gesicherten Nachweis eines Geräteursprungs zu schaffen sowie eine geeignete Implementierung zur Durchführung des Verfahrens anzugeben.

Diese Aufgabe wird erfindungsgemäß durch ein Verfahren mit den in Patentanspruch 1 angegebenen Merkmalen, durch ein Gerät mit den in Patentanspruch 15 angegebenen Merkmalen und durch ein Überprüfungseinrichtung mit den in Patentanspruch 16 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zum kryptographisch gesicherten Nachweis eines Geräteursprungs wird in einen nicht veränderbaren Speicherbereich eines Geräts ein öffentlicher Schlüssel eines Herstellers des Geräts gespeichert. Der öffentliche Schlüssel des Herstellers wird vorzugsweise bei einer Herstellung des Geräts in den nicht veränderbaren Speicherbereich geschrieben. Im Gerät wird ein mit dem öffentlichen Schlüssel verknüpftes Gerätezertifikat gespeichert, das Informationen zur Verwendung des öffentlichen Schlüssels und Merkmale des Geräts umfasst. Die Merkmale des Geräts können beispielsweise Merkmale von an das Gerät angeschlossenen Baugruppen umfassen.

Das Gerätezertifikat kann vorteilhafterweise ebenfalls im nicht veränderbaren Speicherbereich des Geräts gespeichert werden. Beispielsweise wird das Gerätezertifikat mittels des privaten Schlüssels des Herstellers anhand einer digitalen Signatur der Informationen zur Verwendung des öffentlichen Schlüssels und der Merkmale des Geräts erstellt. Insbesondere kann das Gerätezertifikat mittels der digitalen Signatur mit dem öffentlichen Schlüssel des Herstellers verknüpft werden. Alternativ oder zusätzlich hierzu kann das Gerätezertifikat für den öffentlichen Schlüssel gemäß einer Sicherheitspolitik des Herstellers nach vorgegebenen Kriterien erstellt werden. Vorzugsweise wird das Gerätezertifikat zur Erstellung von operationalen Zertifikaten für ein sichere Firmware-Updates oder für signierte Konfigurationsdateien verwendet.

Ein nicht veränderbar Speicherbereich kann dadurch gegeben sein, dass ein Ändern oder Überschreiben eines Speicherinhalts physikalisch, insbesondere durch Verwendung eines Read-Only-Memorys (ROM) oder von eFuses (OTP-Memory, One Time Programmable) nicht möglich ist. Es ist jedoch ebenso möglich, dass ein unzulässiges Ändern oder Überschreiben durch ein elektrisches Schreibschutzsignal oder eine logische Zugriffskontrolle verhindert wird.

Erfindungsgemäß wird anhand der vom Gerätezertifikat umfassten Merkmale und anhand veränderlicher, während eines Betriebs des Geräts erzeugter Daten, von außerhalb des Geräts zumindest mittelbar vorgegebener Daten bzw. erfasster Statusinformationen ein digitaler Fingerabdruck des Geräts erstellt und fortlaufend aktualisiert. Für eine Erstellung des digitalen Fingerabdrucks können also von außerhalb des Geräts beeinflussbare Daten verwendet werden, die direkt oder in bearbeiteter Form bzw. indirekt in den digitalen Fingerabdruck eingehen. Zur Berücksichtigung von außerhalb des Geräts beeinflussbaren bzw. bereitgestellten Daten kann beispielsweise eine Eingabeschnittstelle, eine Netzwerkschnittstelle oder ein Sensor des Geräts verwendet werden. Der digitale Fingerabdruck wird vorzugsweise alphanumerisch bzw. als QR-Code an einer dem Gerät zugeordneten Anzeigeeinrichtung bzw. an einer in das Gerät integrierten Anzeigeeinrichtung dargestellt. Unter einer fortlaufenden Aktualisierung des digitalen Fingerabdrucks ist zu verstehen, dass diese nicht nur kontinuierlich erfolgen kann, sondern beispielsweise auch wiederholt, periodisch oder ereignisgesteuert. Insbesondere können sich ändernde Merkmale des Geräts oder Änderungen der von außerhalb des Geräts vorgegebenen Daten bzw. der Statusinformationen adäquat durch einen dynamisch angepassten digitalen Fingerabdruck widergespiegelt werden. Dabei können die während des Betriebs des Geräts erzeugten Daten, von außerhalb des Geräts zumindest mittelbar vorgegebenen Daten bzw. erfassten Statusinformationen beispielsweise Zufallszahlen, Zeitstempel, eine Seriennummer, Hardwarekennzeichen, ein Herstellungsdatum bzw. einen Software-Versionsstand umfassen.

Der digitale Fingerabdruck wird entsprechend dem erfindungsgemäßen Verfahren für einen Nachweis des Geräteursprungs an eine dem Hersteller zugeordnete Überprüfungseinrichtung übermittelt. Anschließend wird der digitale Fingerabdruck durch die Überprüfungseinrichtung mittels eines privaten Schlüssels des Herstellers und anhand von bei einer Erstellung des Gerätezertifikats herstellerseitig erfassten Referenz-Merkmalen des Geräts verifiziert. Als Ergebnis dieser Verifizierung kann vorteilhafterweise signalisiert werden, ob es sich beim jeweiligen Gerät um ein Originalgerät bzw. ein nicht manipuliertes Gerät handelt oder nicht.

Das erfindungsgemäße Verfahren ist besonders sicher gegenüber Manipulationen am jeweiligen Gerät, da ein einmal aufgezeichneter oder abgefangener digitaler Fingerabdruck nicht für andere Geräte oder für einen anderen Gerätezustand wiederverwendet werden kann. In die Erstellung des digitalen Fingerabdrucks fließen nämlich während des Betriebs des Geräts nicht bzw. nicht ohne Weiteres vorhersehbare Daten ein. Außerdem ist die Erstellung des digitalen Fingerabdrucks unabhängig von einem Boot-Vorgang und kann grundsätzlich jederzeit wiederholt werden. Somit erfordert die Erstellung des digitalen Fingerabdrucks insbesondere keine Interaktion seitens eines Gerätebenutzers oder Anlagenbetreibers.

Dadurch dass der digitale Fingerabdruck durch die Überprüfungseinrichtung und somit außerhalb des jeweiligen Geräts verifiziert wird, sind Hürden für potenzielle Angreifer deutlich erhöht. Zudem können durch das erfindungsgemäße Verfahren auch an ein Automatisierungsgerät angeschlossene I/O-Module (Input/Output), für die mitunter erhebliche Investitionen erforderlich sind, ebenfalls verifiziert werden, ohne dass diese I/O-Module selber Voraussetzungen zur Durchführung des Verfahrens, insbesondere Kryptographie-Module, aufweisen müssen.

In Unterschied zu Device Identifier Composition Engine (DICE) können mit der vorliegenden Erfindung insbesondere Informationen über einen aktuellen Software-Versionsstand und über Geräte-individuelle Merkmale in eine Erzeugung von durch die Überprüfungseinrichtung verwendeten Referenzwerten eingehen. Außerdem wird bei der vorliegenden Erfindung ein zweistufiger Vergleichstest zwischen aktuell berechneten Gerätewerten und Hersteller-seitig erfassten bzw. vorgegebenen Referenzwerten durchgeführt. Darüber hinaus ist eine Anwendung der vorliegenden Erfindung im Unterschied zu Remote Attestation nicht auf Boot-Vorgänge beschränkt. Zusätzlich können von außerhalb des jeweiligen Geräts bereitzustellende Parameter vorgegeben werden, die in die Erstellung eines gültigen digitalen Fingerabdrucks einzubeziehen sind.

Vorzugsweise wird bei einer Verifizierung des digitalen Fingerabdrucks überprüft, ob die vom Gerätezertifikat umfassten Merkmale des Geräts unverändert sind und ob die vom digitalen Fingerabdruck umfassten, während des Betriebs des Geräts erzeugten Daten, von außerhalb des Geräts zumindest mittelbar vorgegebenen Daten bzw. erfassten Statusinformationen vorgegebenen Gültigkeitsregeln entsprechen. Die Gültigkeitsregeln korrespondieren vorteilhafterweise mit geräteseitig zu implementierenden Regeln zur Erzeugung bzw. Erfassung der vom digitalen Fingerabdruck umfassten Daten bzw. Statusinformationen. Auf diese Weise werden durch eine Manipulation des digitalen Fingerabdrucks bedingte Sicherheitsrisiken deutlich reduziert.

Entsprechend einer besonders vorteilhaften Ausgestaltung der vorliegenden Erfindung wird der digitale Fingerabdruck durch ein Hardware-Sicherheitsmodul oder Trusted Platform Module des Geräts erzeugt. Darüber hinaus wird der digitale Fingerabdruck durch das Gerät vorzugsweise zu vorgegebenen Zeitpunkten, bei Veränderung der vom Gerätezertifikat umfassten Merkmale des Geräts und/oder der während des Betriebs erfassten Statusinformationen automatisch aktualisiert. Dies ermöglicht eine besondere sichere und zuverlässige Implementierung eines Verfahrens zum kryptographisch gesicherten Nachweis eines Geräteursprungs.

Das erfindungsgemäße Gerät ist zur Durchführung eines Verfahrens entsprechend vorangehenden Ausführungen vorgesehen und weist einen nicht veränderbaren Speicherbereich auf, in dem ein öffentlicher Schlüssel eines Herstellers des Geräts gespeichert ist. Außerdem ist das Gerät dafür eingerichtet, ein mit dem öffentlichen Schlüssel verknüpftes Gerätezertifikat zu speichern, das Informationen zur Verwendung des öffentlichen Schlüssels und Merkmale des Geräts umfasst.

Darüber hinaus ist das erfindungsgemäße Gerät dafür eingerichtet, anhand der vom Gerätezertifikat umfassten Merkmale und anhand während eines Betriebs des Geräts erzeugter Daten, von außerhalb des Geräts zumindest mittelbar vorgegebener Daten bzw. erfasster Statusinformationen ein digitaler Fingerabdruck des Geräts zu erstellen und fortlaufend zu aktualisieren. Des Weiteren ist das Gerät dafür eingerichtet, den digitalen Fingerabdruck für einen Nachweis des Geräteursprungs mittelbar oder unmittelbar an eine dem Hersteller zugeordnete Überprüfungseinrichtung zur dortigen Verifizierung bereitzustellen.

Der erfindungsgemäße Überprüfungseinrichtung ist zur Durchführung eines Verfahrens entsprechend vorangehenden Ausführungen vorgesehen und dafür eingerichtet, einen digitalen Fingerabdruck eines Geräts für einen Nachweis des Geräteursprungs zur Verifizierung entgegenzunehmen. Dabei ist der digitale Fingerabdruck anhand von einem Gerätezertifikat umfasster Merkmale des Geräts und anhand während eines Betriebs des Geräts erzeugter Daten, von außerhalb des Geräts zumindest mittelbar vorgegebener Daten bzw. erfasster Statusinformationen erstellt. Außerdem ist die Überprüfungseinrichtung dafür eingerichtet, den digitalen Fingerabdruck mittels eines privaten Schlüssels eines Herstellers des Geräts und anhand von bei einer Erstellung des Gerätezertifikats herstellerseitig erfassten Referenz-Merkmalen des Geräts zu verifizieren.

Die vorliegende Erfindung wird nachfolgend an einem Ausführungsbeispiel anhand der Zeichnung näher erläutert. Es zeigt die
- Figur 1: eine Anordnung mit einem Gerät, dessen Geräteur-sprung bzw. Identität zu verifizieren ist, und einer Überprüfungseinrichtung, die einem Hersteller des Geräts zugeordnet ist und digitale Fingerabdrücke von Geräten verifiziert,
- Figur 2: ein Ablaufdiagramm für ein Verfahren zum kryptographisch gesicherten Nachweis eines Geräteursprungs.

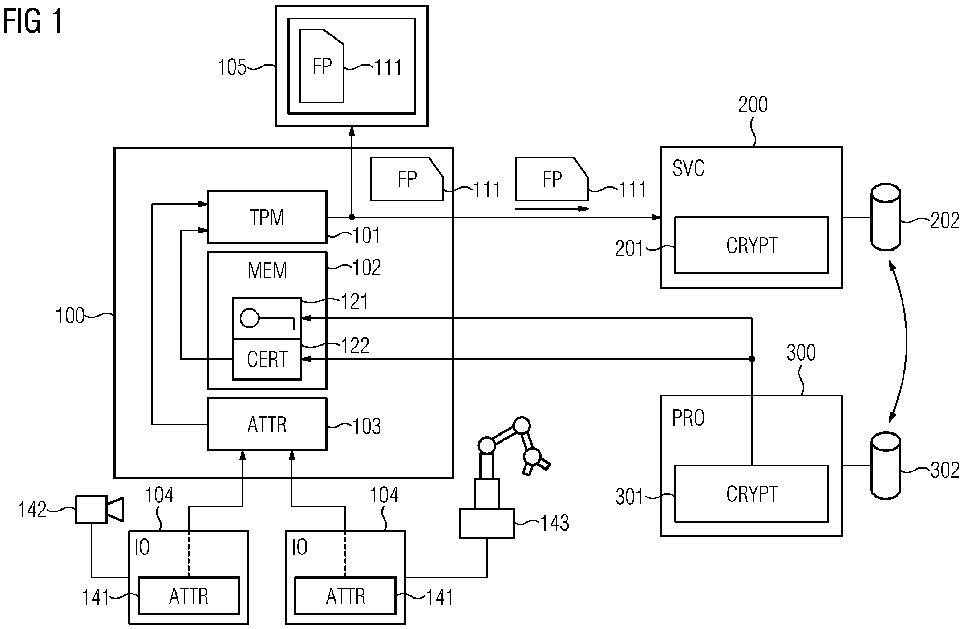

Die in Figur 1 dargestellte Anordnung umfasst ein Gerät 100, insbesondere ein Automatisierungsgerät, dessen Geräteursprung bzw. Identität zu verifizieren ist, eine Überprüfungseinrichtung 200, die einen Verifizierungsdienst zum kryptographisch gesicherten Nachweis des Geräteursprungs bereitstellt, und einen Server 300 innerhalb einer Produktionsumgebung eines Herstellers des Geräts 100. Dabei ist die Überprüfungseinrichtung 200 dem Hersteller des Geräts 100 zugeordnet.

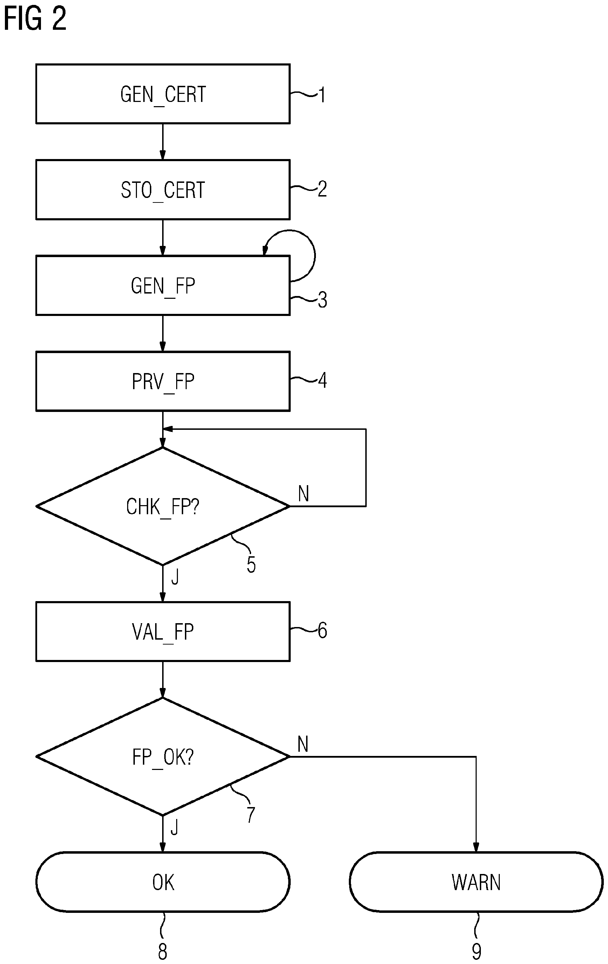

Der Server 300 umfasst ein Kryptographie-Modul 301 und erzeugt entsprechend Schritt 1 des in Figur 2 dargestellten Ablaufdiagramms ein Gerätezertifikat 122, das mit einem öffentlichen Schlüssel 121 des Herstellers verknüpft ist und Informationen zur Verwendung des öffentlichen Schlüssels 121 sowie Merkmale 103 des Geräts 100 umfasst. Diesen Merkmale 103 zugeordnete Referenz-Merkmale werden während eines Herstellungsprozesses des Geräts 100 in einer herstellerseitigen Datenbank 302 erfasst. Im vorliegenden Ausführungsbeispiel werden der öffentliche Schlüssel 121 des Herstellers und das durch den Server 300 erzeugte Gerätezertifikat 122 entsprechend Schritt 2 während des Herstellungsprozesses in einen nicht veränderbaren Speicherbereich 102 des Geräts 100 geschrieben.

Vorzugsweise wird das Gerätezertifikat 122 für den öffentlichen Schlüssel 121 gemäß einer Sicherheitspolitik des Herstellers nach vorgegebenen Kriterien erstellt. Alternativ oder zusätzlich dazu kann das Gerätezertifikat 122 mittels eines privaten Schlüssels des Herstellers anhand einer digitalen Signatur der Informationen zur Verwendung des öffentlichen Schlüssels 121 und der Merkmale 103 des Geräts 100 erstellt werden. Mittels dieser digitalen Signatur kann das Gerätezertifikat 122 mit dem öffentlichen Schlüssel 121 des Herstellers verknüpft werden.

Das Gerät 100 erstellt anhand der vom Gerätezertifikat 122 umfassten Merkmale 103 und anhand während eines Betriebs des Geräts 100 erzeugter Daten, von außerhalb des Geräts 100 zumindest mittelbar vorgegebener Daten bzw. erfasster Statusinformationen einen digitalen Fingerabdruck 111 des Geräts 100 und aktualisiert diesen fortlaufend (Schritt 3). Im vorliegenden Ausführungsbeispiel wird der digitale Fingerabdruck 111 durch ein Hardware-Sicherheitsmodul bzw. Trusted Platform Module 101 des Geräts 100 erzeugt. Bei einer bzw. Aktualisierung des digitalen Fingerabdrucks 111 werden die Merkmale 103 des Geräts 100 vorzugsweise um Merkmale 141 von an das Gerät 100 angeschlossenen Baugruppen 104 ergänzt. Die Merkmale 141 der an das Gerät 100 angeschlossenen Baugruppen 104 fließen somit auch in den digitalen Fingerabdruck 111 ein.

Die vom Gerätezertifikat 122 umfassten Merkmale 103 charakterisieren insbesondere, welche Merkmale des Geräts 100, welche Merkmale von im Gerät 100 verbauten Komponenten bzw. welche Merkmale von an das Gerät 100 angeschlossenen Baugruppen 104 in die Bildung des digitalen Fingerabdrucks 111 eingehen. Dabei werden die entsprechenden Merkmale ermittelt, um den digitalen Fingerabdruck 111 zu bilden. Einzelne Merkmale können beispielsweise eine Seriennummer (Identifier), einen Versionsstand einer Komponente oder Baugruppe, eine Konfigurationsinformation, Kalibrierungsdaten, ein Verbrauchszähler oder ein Betriebsstundenzähler sein. Weiterhin ist es möglich, ein die Komponente oder Baugruppe charakterisierendes Merkmal durch eine Messung zu ermitteln, beispielsweise mittels eines Sensors, der elektrische oder physikalische Eigenschaften der Komponente oder Baugruppe misst.

Falls einzelne Merkmale nicht ermittelbar sind, beispielsweise wenn eine erwartete Baugruppe nicht verbunden ist oder wenn eine Komponente des Geräts 100 defekt sein sollte, kann antelle des ermittelten Merkmals ein Merkmal-Ersatzwert in die Bildung des digitalen Fingerabdrucks 111 eingehen. Anhand des Merkmal-Ersatzwerts kann erkannt werden, dass ein Ermitteln des jeweiligen Merkmals technisch nicht möglich ist. Dadurch kann ein digitaler Fingerabdruck 111 selbst dann noch gebildet werden, wenn nicht alle vom Gerätezertifikat 122 umfassten Merkmale 103 zur Laufzeit ermittelbar sein sollten. Weiterhin ist es möglich, dass ein digitaler Fingerabdruck 111 nur dann gebildet oder bereitgestellt wird, wenn eine Mindestanzahl von Merkmalen ermittelbar ist oder wenn die Merkmale für eine Menge von verpflichtend erforderlichen Merkmalen ermittelbar ist. Dabei kann im Gerätezertifikat 122 eine den von Gerätezertifikat 122 umfassten Merkmalen 103 zugeordnete Information enthalten sein, die angibt, ob das entsprechende Merkmal ein verpflichtend zu ermittelndes Merkmal ist. Ebenso kann das Gerätezertifikat 122 eine Information zur Mindestanzahl von zu ermittelnden Merkmalen umfassen.

Die während des Betriebs des Geräts 100 erzeugten Daten, von außerhalb des Geräts zumindest mittelbar vorgegebenen Daten bzw. erfassten Statusinformationen können insbesondere Zufallszahlen, Zeitstempel, eine Seriennummer, Hardwarekennzeichen, ein Herstellungsdatum und einen Software-Versionsstand umfassen. Mit derartigen dynamisch veränderlichen Daten wird der digitale Fingerabdruck 111 durch das Gerät 100 vorteilhafterweise zu vorgegebenen Zeitpunkten, bei Veränderung der vom Gerätezertifikat 122 umfassten Merkmale 103 des Geräts 100 bzw. der während des Betriebs erfassten Statusinformationen automatisch aktualisiert.

Weiterhin ist es möglich, dass das Gerät 100 eine Zulässigkeit der während des Betriebs des Geräts 100 erzeugten Daten, von außerhalb des Geräts zumindest mittelbar vorgegebenen Daten bzw. erfassten Statusinformationen prüft. Ein digitaler Fingerabdruck 111 wird in diesem Fall nur dann gebildet oder nur dann bereitgestellt, wenn die Zulässigkeit erfolgreich überprüft werden konnte. Dadurch kann verhindert werden, dass ein digitaler Fingerabdruck 111 gebildet oder bereitgestellt wird, wenn die während des Betriebs des Geräts 100 erzeugten Daten, von außerhalb des Geräts zumindest mittelbar vorgegebenen Daten bzw. erfassten Statusinformationen nicht plausibel sind. Dadurch kann beispielsweise überprüft werden, ob das Gerät 100 wie vorgesehen installiert ist und betrieben wird.

Darüber hinaus ist das Gerät 100 dafür eingerichtet, den digitalen Fingerabdruck 111 für einen Nachweis des Geräteursprungs mittelbar oder unmittelbar an die Überprüfungseinrichtung 200 zur dortigen Verifizierung bereitzustellen. Hierzu wird der digitale Fingerabdruck 111 entsprechend Schritt 4 vorzugsweise alphanumerisch bzw. als QR-Code an einer Anzeigeeinrichtung 105 des Geräts dargestellt und kann somit zur Verifizierung an die Überprüfungseinrichtung 200 übermittelt werden, falls dies entsprechend Schritt 5 erwünscht ist. Grundsätzlich könnte das Gerät 100 den digitalen Fingerabdruck 111 auch selbständig bzw. direkt an die Überprüfungseinrichtung 200 übermitteln.

Die Überprüfungseinrichtung 200 ist insbesondere dafür eingerichtet, den digitalen Fingerabdruck 111 des Geräts 100 für den Nachweis des Geräteursprungs zur Verifizierung entgegenzunehmen. Wenn der digitale Fingerabdruck 111 für den Nachweis des Geräteursprungs an die Überprüfungseinrichtung 200 übermittelt worden ist, verifiziert ein Kryptographie-Modul 201 der Überprüfungseinrichtung 200 den digitalen Fingerabdruck 111 mittels des privaten Schlüssels des Herstellers und anhand der herstellerseitig erfassten Referenz-Merkmale des Geräts 100 (Schritt 6). Für die Verifizierung sind in einer der Überprüfungseinrichtung 200 zugeordneten Datenbank 202 Referenz-Merkmale gespeichert, die mit den in der herstellerseitigen Datenbank 302 erfassten Referenz-Merkmalen synchronisiert werden.

Bei der Verifizierung des digitalen Fingerabdrucks 111 wird im vorliegenden Ausführungsbeispiel überprüft (Schritt 7), ob die vom Gerätezertifikat 122 umfassten Merkmale 103 des Geräts 100 unverändert sind und ob die vom digitaler Fingerabdruck 111 umfassten, während des Betriebs des Geräts 100 erzeugten Daten, von außerhalb des Geräts zumindest mittelbar vorgegebenen Daten bzw. erfassten Statusinformationen vorgegebenen Gültigkeitsregeln entsprechen. Dabei korrespondieren die Gültigkeitsregeln mit geräteseitig zu implementierenden Regeln zur Erzeugung bzw. Erfassung der vom digitalen Fingerabdruck 111 umfassten Daten bzw. Statusinformationen.

Wenn die vom Gerätezertifikat 122 umfassten Merkmale 103 des Geräts 100 unverändert sind und die vom digitaler Fingerabdruck 111 umfassten, während des Betriebs des Geräts 100 erzeugten Daten, von außerhalb des Geräts zumindest mittelbar vorgegebenen Daten bzw. erfassten Statusinformationen den vorgegebenen Gültigkeitsregeln entsprechen, signalisiert die Überprüfungseinrichtung 200 entsprechend Schritt 8 ein positives Überprüfungsergebnis. Andernfalls signalisiert die Überwachungseinrichtung 200 eine Warnung (Schritt 9).

Das Gerätezertifikat 122 wird vorzugsweise zur Erstellung von operationalen Zertifikaten für ein sichere Firmware-Updates oder für signierte Konfigurationsdateien verwendet. Dies ist von besonderer Bedeutung, wenn das Gerät 100 als Automatisierungsgerät ausgestaltet und beispielsweise eine speicherprogrammierbare Steuerung, eine Bedien- und Beobachtungsstation, ein I/O-Controller oder ein I/O-Modul ist.

Speicherprogrammierbare Steuerungen umfassen typischerweise jeweils ein Kommunikationsmodul, eine Zentraleinheit sowie zumindest eine Eingabe/Ausgabe-Einheit dar. Eingabe/Ausgabe-Einheiten können grundsätzlich auch als dezentrale Peripheriemodule ausgestaltet sein, die entfernt von einer speicherprogrammierbaren Steuerung angeordnet sind. Die Zentraleinheit ist insbesondere für eine Ermittlung geeigneter Steuerungsgrößen aus erfassten Messgrößen vorgesehen. Obige Komponenten einer speicherprogrammierbaren Steuerung sind beispielsweise über ein Rückwandbus-System miteinander verbunden. Über das Kommunikationsmodul kann eine speicherprogrammierbare Steuerung mit einem Switch oder Router oder zusätzlich mit einem Feldbus verbunden werden. Die Eingabe/AusgabeEinheit dient einem Austausch von Steuerungs- und Messgrößen zwischen einer speicherprogrammierbaren Steuerung und einer durch eine speicherprogrammierbare Steuerung gesteuerten Maschine oder Vorrichtung 142-143. Im vorliegenden Ausführungsbeispiel sind solche Maschinen oder Vorrichtungen 142-143 mit den Baugruppen 104 verbunden, die an das Gerät 100 angeschlossen sind und als I/O-Module ausgestaltet sein können. I/O-Module dienen zum Austausch von Steuerungs- und Messgrößen mit angeschlossenen Maschinen oder Vorrichtungen 142-143. Alternativ zu einer speicherprogrammierbaren Steuerung kann für I/O-Module kann pro Automatisierungszelle ein zugeordneter I/O-Controller vorgesehen sein.

Wenn das Gerät 100 als Bedien- und Beobachtungsstation ausgestaltet ist, dient es zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation zur Anzeige von Werten eines Regelungskreises und zur Veränderung von Regelungsparametern verwendet. Eine Bedien- und Beobachtungsstation umfasst zumindest eine graphische Benutzerschnittstelle, der ein Eingabegerät zugeordnet ist, eine Prozessoreinheit und ein Kommunikationsmodul.

Grundsätzlich kann das Gerät 100 auch als Kommunikationsgerät ausgestaltet sein, insbesondere als Switch, Bridge, Router oder Funk-Basisstation für ein industrielles Automatisierungssystem. Bridges bzw. Switche umfassen jeweils mehrere Ports sowie einen Backplane-Switch als Koppelelement und dienen insbesondere zum Anschluss von speicherprogrammierbaren Steuerungen, Bedien- und Beobachtungsstationen, I/O-Controllern oder I/O-Modulen, die ebenfalls Kommunikationsgerätefunktionen aufweisen.

## Patentansprüche

1. Verfahren zum kryptographisch gesicherten Nachweis eines Geräteursprungs, bei dem
- in einen nicht veränderbaren Speicherbereich (102) eines Geräts (100) ein öffentlicher Schlüssel (121) eines Herstellers des Geräts gespeichert wird,
- im Gerät ein mit dem öffentlichen Schlüssel verknüpftes Gerätezertifikat (122) gespeichert wird, das Informationen zur Verwendung des öffentlichen Schlüssels und Merkmale (103) des Geräts umfasst,
- anhand der vom Gerätezertifikat (122) umfassten Merkmale (103) und anhand veränderlicher, während eines Betriebs des Geräts erzeugter Daten, von außerhalb des Geräts zumindest mittelbar vorgegebener Daten und/oder erfasster Statusinformationen ein digitaler Fingerabdruck (111) des Geräts erstellt und fortlaufend aktualisiert wird,
- der digitale Fingerabdruck (111) für einen Nachweis des Geräteursprungs an eine dem Hersteller zugeordnete Überprüfungseinrichtung (200) übermittelt wird,
- der digitale Fingerabdruck (111) durch die Überprüfungseinrichtung (200) mittels eines privaten Schlüssels des Herstellers und anhand von bei einer Erstellung des Gerätezertifikats herstellerseitig erfassten Referenz-Merkmalen des Geräts (100) verifiziert wird.

2. Verfahren nach Anspruch 1,
bei dem bei einer Verifizierung des digitalen Fingerabdrucks (111) überprüft wird, ob die vom Gerätezertifikat (122) umfassten Merkmale (103) des Geräts (100) unverändert sind und ob die vom digitaler Fingerabdruck (111) umfassten, während des Betriebs des Geräts erzeugten Daten, von außerhalb des Geräts zumindest mittelbar vorgegebenen Daten und/oder erfassten Statusinformationen vorgegebenen Gültigkeitsregeln entsprechen.

3. Verfahren nach Anspruch 2,
bei dem die Gültigkeitsregeln mit geräteseitig zu implementierenden Regeln zur Erzeugung und/oder Erfassung der vom digitalen Fingerabdruck umfassten Daten und/oder Statusinformationen korrespondieren.

4. Verfahren nach einem der Ansprüche 1 bis 3,
bei dem der öffentliche Schlüssel (121) des Herstellers bei einer Herstellung des Geräts (100) in den nicht veränderbaren Speicherbereich (102) geschrieben wird.

5. Verfahren nach einem der Ansprüche 1 bis 4,
bei dem das Gerätezertifikat (122) ebenfalls im nicht veränderbaren Speicherbereich (102) des Geräts (100) gespeichert wird.

6. Verfahren nach einem der Ansprüche 1 bis 5,
bei dem das Gerätezertifikat für den öffentlichen Schlüssel gemäß einer Sicherheitspolitik des Herstellers nach vorgegebenen Kriterien erstellt wird.

7. Verfahren nach einem der Ansprüche 1 bis 5,
bei dem das Gerätezertifikat mittels des privaten Schlüssels des Herstellers anhand einer digitalen Signatur der Informationen zur Verwendung des öffentlichen Schlüssels und der Merkmale des Geräts erstellt wird.

8. Verfahren nach Anspruch 7,
bei dem das Gerätezertifikat mittels der digitalen Signatur mit dem öffentlichen Schlüssel des Herstellers verknüpft wird.

9. Verfahren nach einem der Ansprüche 1 bis 8,
bei dem das Gerätezertifikat zur Erstellung von operationalen Zertifikaten für ein sichere Firmware-Updates oder für signierte Konfigurationsdateien verwendet wird.

10. Verfahren nach einem der Ansprüche 1 bis 9,
bei dem der digitale Fingerabdruck (111) durch ein Hardware-Sicherheitsmodul oder Trusted Platform Module (101) des Geräts (100) erzeugt wird.

11. Verfahren nach einem der Ansprüche 1 bis 10,
bei dem die während des Betriebs des Geräts erzeugten Daten, von außerhalb des Geräts zumindest mittelbar vorgegebenen Daten und/oder erfassten Statusinformationen Zufallszahlen, Zeitstempel, eine Seriennummer, Hardwarekennzeichen, ein Herstellungsdatum und/oder einen Software-Versionsstand umfassen.

12. Verfahren nach einem der Ansprüche 1 bis 11,
bei dem der digitale Fingerabdruck durch das Gerät zu vorgegebenen Zeitpunkten, bei Veränderung der vom Gerätezertifikat umfassten Merkmale des Geräts und/oder der während des Betriebs erfassten Statusinformationen automatisch aktualisiert wird.

13. Verfahren nach einem der Ansprüche 1 bis 12,
bei dem der digitale Fingerabdruck (111) alphanumerisch und/oder als QR-Code an einer Anzeigeeinrichtung (105) des Geräts (100) dargestellt wird.

14. Verfahren nach einem der Ansprüche 1 bis 13,
bei dem die Merkmale (103) des Geräts (100) Merkmale (141) von an das Gerät (100) angeschlossenen Baugruppen (104) umfassen.

15. Gerät zur Durchführung eines Verfahrens nach einem der Ansprüche 1 bis 14, wobei das Gerät
- einen nicht veränderbaren Speicherbereich aufweist, in dem ein öffentlicher Schlüssel eines Herstellers des Geräts gespeichert ist, und dafür eingerichtet ist,
- ein mit dem öffentlichen Schlüssel verknüpftes Gerätezertifikat zu speichern, das Informationen zur Verwendung des öffentlichen Schlüssels und Merkmale des Geräts umfasst,
- anhand der vom Gerätezertifikat umfassten Merkmale und anhand während eines Betriebs des Geräts erzeugter Daten, von außerhalb des Geräts zumindest mittelbar vorgegebener Daten und/oder erfasster Statusinformationen ein digitaler Fingerabdruck des Geräts zu erstellen und fortlaufend zu aktualisieren,
- den digitalen Fingerabdruck für einen Nachweis des Geräteursprungs an eine dem Hersteller zugeordnete Überprüfungseinrichtung zur dortigen Verifizierung bereitzustellen.

16. Überprüfungseinrichtung zur Durchführung eines Verfahrens nach einem der Ansprüche 1 bis 14, wobei die Überprüfungseinrichtung dafür eingerichtet ist,
- einen digitalen Fingerabdruck eines Geräts für einen Nachweis des Geräteursprungs zur Verifizierung entgegenzunehmen, wobei der digitale Fingerabdruck anhand von einem Gerätezertifikat umfasster Merkmale des Geräts und anhand während eines Betriebs des Geräts erzeugter Daten, von außerhalb des Geräts zumindest mittelbar vorgegebener Daten und/oder erfasster Statusinformationen erstellt ist,
- den digitalen Fingerabdruck mittels eines privaten Schlüssels eines Herstellers des Geräts und anhand von bei einer Erstellung des Gerätezertifikats herstellerseitig erfassten Referenz-Merkmalen des Geräts zu verifizieren.
